(19) **Europäisches Patentamt**
**European Patent Office**
**Office européen des brevets**

(11) **EP 2 632 628 B1**

(12) **EUROPÄISCHE PATENTSCHRIFT**

(45) Veröffentlichungstag und Bekanntmachung des Hinweises auf die Patenterteilung:
**25.03.2015  Patentblatt 2015/13**

(21) Anmeldenummer: **11808562.0**

(22) Anmeldetag: **20.10.2011**

(51) Int Cl.:
*B23K 35/02* (2006.01)     *B23K 35/30* (2006.01)
*B32B 15/01* (2006.01)     *C22C 19/05* (2006.01)
*C22C 30/00* (2006.01)     *C22F 1/10* (2006.01)
*C22C 38/08* (2006.01)     *C22C 38/44* (2006.01)
*C22C 30/02* (2006.01)     *C22C 38/00* (2006.01)
*C22C 38/02* (2006.01)     *C22C 38/06* (2006.01)
*C22C 38/42* (2006.01)     *C22C 38/54* (2006.01)
*C22C 38/58* (2006.01)     *F16L 9/02* (2006.01)

(86) Internationale Anmeldenummer:
**PCT/DE2011/001875**

(87) Internationale Veröffentlichungsnummer:
**WO 2012/059080 (10.05.2012 Gazette 2012/19)**

(54) **NI-FE-CR-MO-LEGIERUNG**

NI-FE-CR-MO ALLOY

ALLIAGE NI-FE-CR-MO

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.10.2010   DE 102010049781**

(43) Veröffentlichungstag der Anmeldung:
**04.09.2013   Patentblatt 2013/36**

(73) Patentinhaber: **VDM Metals GmbH**
**58791 Werdohl (DE)**

(72) Erfinder:
• **ALVES, Helena**
  **44388 Dortmund (DE)**
• **BEHRENS, Rainer**
  **58644 Iserlohn (DE)**

(56) Entgegenhaltungen:
**EP-A1- 0 292 061     WO-A1-2010/133197**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Ni-Fe-Cr-Mo-Legierung, insbesondere eine modifizierte Legierung gemäß EN-Werkstoff Nr. 1.4562.

Die Legierung mit der Werkstoff Nr. 1.4562 hat im Mittel folgende chemische Zusammensetzung (Richtwerte in Masse-%) Ni 31 %, Mn 1,7 %, Cr 27 %, Mo 6,5 %, Cu 1,3 %, N 0,2 %.

Die DE 32 23 457 A1 betrifft eine Legierung, insbesondere zur Herstellung hochbelastbarer Verrohrungen von Tiefbohrungen oder dergleichen mit erhöhter Widerstandsfähigkeit gegen Spannungsrisskorrosion, bestehend aus C $\leq$ 0,1 %, Mn 3 - 20 %, S $\leq$ 0,005 %, Al $\leq$ 0,5 %, Cr 22,5 - 35 %, W 0 - 8 %, Si $\leq$1 %, P $\leq$ 0,03 %, N 0 - 0,3 %, Ni 25 - 60 %, Mo 0 - 4 %, Cu 0 - 2 %, SE 0 - 0,1 %, Mg 0 - 0,1 %, Ca 0 - 0,1 %, Co 0 - 2 %. Y 0 - 0,2 %, Ti 0 - 0,5 %, wobei

Cr (%) + 10 Mo (%) + 5 W (%) $\geq$ 50 %

½Mn (%) + Ni (%) $\geq$ 35 (%)

1,5 % $\leq$ Mo (%) + ½ W (%) < 4.

Der US 5,841,046 ist ein hochfester korrosionsbeständiger austenitischer rostfreier Stahl zu entnehmen, der eine Wirksumme PREN > 55 beinhaltet. Vorgestellt wird eine Legierung folgender Zusammensetzung (in Masse-%): max. 0,08 % C, 0,5 - 12,5 % Mn, 20 - 29 % Cr, 17 - 35 % Ni, 3 - 10 % Mo, > 0,7 % N, bis zu 1,0 % Si, bis zu 0,02 % B, bis zu 0,02 % Mg, bis zu 0,05 % Ce, Rest Eisen. Bei Chromgehalten zwischen 24 und 28 % werden Nickelgehalte zwischen 21 und 23 % angegeben, wobei die Wirksumme PREN sich zwischen 49 und 65 bewegt. Von Bedeutung bei diesem Stand der Technik ist der extrem hohe Stickstoffgehalt.

In der US 4,824,638 wird eine korrosionsbeständige Legierung folgender chemischer Zusammensetzung (in Masse-%) beschrieben: 20,5 - 32 % Nickel, 23,5 bis 27,5 % Chrom, 4 bis 6,7 % Molybdän, 0,7 bis 3,6 % Kupfer, bis zu 0,09 % Kohlenstoff, bis zu 1,5 % Silizium, bis zu 5 % Kobalt, bis zu 0,45 % Stickstoff, bis zu 1 % Titan, bis zu 0,8 % Niob, bis zu 0,3 % Seltene Erden (Ce, La, Mischmetall), bis 2 % Mangan, bis zu 1,6 % Tantal, Rest Eisen, wobei die Summe des Nickel-und Kobaltgehalts zwischen 25,5 und 32 % angesiedelt ist und der Chromgehalt um 2 bis 6,2 % überschritten wird.

Durch die EP 0 292 061 A1 ist eine Legierung bekannt geworden mit (in Masse-%) 30 - 32 Ni, 26 - 28 Cr, 0,5 - 1,5 % Cu, max. 2 % Mn, max. 1 % Si, max. 0,2 % Al, max. 0,02 % C, Rest Fe einschließlich unvermeidbarer Beimengungen, die darüber hinaus noch 6 - 7 % Mo und 0,1 - 0,25 % N enthält.

Die Legierung gemäß EP 0 292 061 A1 ist entwickelt worden, um einen Werkstoff zur Verfügung stellen zu können, der geeignet ist zur Herstellung von Bauteilen, die in wässrigen, neutralen oder sauren Medien mit hoher Chloridionenkonzentration eine gute Korrosionsbeständigkeit, insbesondere gegenüber Lochfraß- und/oder Spaltkorrosion aufweisen müssen. Sie soll auch verwendbar sein zur Herstellung von Bauteilen, die in technischer Phosphorsäure mit einer Chloridionenkonzentration bis zu 1000 ppm bei 100°C eine Abtragungsrate von weniger als 0,20 mm/a aufweisen müssen. Sie sollte zugleich geeignet sein zur Herstellung von Bauteilen, die in wässrigen neutralen Medien mit einer Chloridionenkonzentration in der Größenordnung von 20.000 ppm bei 75°C ein Lochfraßpotential von mindestens 1000 mV$_H$ und bei 90°C von mindestens 800 mV$_H$ aufweisen müssen. Sie sollte ferner geeignet sein als Werkstoff zur Herstellung von Bauteilen, die in sauren Medien mit einer Chloridionenkonzentration von 50.000 ppm und mehr, wie z.B. in einer FeCl$_3$-Lösung eine kritische Lochfraßtemperatur von mindestens 80°C und eine kritische Spaltkorrosionstemperatur von mindestens 50°C aufweisen müssen.

In der Folge hat diese bisher verwendete Legierung die in sie gesetzten Erwartungen in der Praxis mehr als erfüllt. Als nachteilig hat sich jedoch die für diese Legierung sehr hoch liegende Lösungsglühtemperatur zur Auflösung der spröden Sigma-Phase herausgestellt, die laut VdTÜV-Werkstoffblatt 509/1, Ausgabe 12.2009 bei 1150 bis 1180°C liegen muss, mit der zusätzlichen Maßgabe einer nachfolgenden schnellen Abkühlung mittels Abschrecken in Wasser oder mit Hilfe von Pressluft (in Abhängigkeit von der Wanddicke) derart, dass der Temperaturbereich bis 650°C schnell durchlaufen wird. Zur Sicherstellung einer einwandfreien Auflösung der Sigma-Phase auch bei dickwandigeren Bauteilen muss in der betrieblichen Praxis zumindest die obere Temperatur von 1180°C verwendet werden. Es gibt nun Fälle, in denen eine solche Lösungsglühbehandlung in den Fertigungsprozess integriert werden muss, beispielsweise beim Warmplattieren großer Blechformate im Sandwichpaket oder beim Warmpressen dickwandiger Kesselböden. Es hat sich dabei herausgestellt, dass die vorstehend genannten Lösungsglüh- und Abkühlbedingungen dabei insofern nicht eingehalten werden können, als dann die für diese Legierung erwarteten hohen Lochfraß- und Spaltkorrosionstemperaturen infolge der Ausscheidung von Sigma-Phase nicht erreicht werden.

Für Legierungen (UNS 32654 / 654 SMO) mit ähnlichen Gehalten an Chrom 24-26% und Molybdän 7-8 % wird in der Literatur (Rechsteiner ETH Zürich Publ. Nr.: 10647) folgende empirische Formel für die Abhängigkeit der Sigma Solvus Temperatur von den Legierungsbestandteilen gefunden:

$$\text{T sigma-solvus} = 24{,}6\ \text{Cr} + 6{,}7\ \text{Mn} + 50{,}9\ \text{Mo} + 92{,}2\ \text{Si} - 9{,}2\ \text{Ni} - 17{,}9\ \text{Cu} - 230{,}4\ \text{C} - 238{,}4\ \text{N} + 447 \quad \text{(Elementangaben: Masseprozent)}$$

Die Elemente Chrom, Molybdän, Silicium und Mangan erhöhen demnach die Sigma-Solvus Temperatur; die Elemente Nickel, Kupfer und insbesondere Stickstoff wirken absenkend für die Sigma-Solvus Temperatur.

Der Erfindung liegt die Aufgabe zugrunde, eine Legierung bereitzustellen, die den vorab beschriebenen technischen Anforderungen genügt, ohne die Vorteile der bisherigen Legierung aufzugeben.

Diese Aufgabe wird gelöst durch eine Legierung mit (in Masse-%)

| | |
|---|---|
| Ni | 33,5-35% |
| Cr | 26-28% |
| Mo | 6-7% |
| Cu | 0,5-1,5% |
| Mn | 1,0-4% |
| Si | max. 0,1 % |
| Al | 0,01-0,3% |
| C | max. 0,01 % |
| N | 0,1-0,25% |
| B | 0,001 - 0,004 % |
| SE | > 0 bis 1 % |

Fe Rest, einschließlich unvermeidbarer Verunreinigungen.

Vorteilhafte Weiterbildungen der erfindungsgemäßen Legierung sind den zugehörigen Unteransprüchen zu entnehmen.

Überraschenderweise hat sich herausgestellt, dass sich der eingangs genannte hohe Lösungsglühtemperaturbereich von 1150 bis 1180°C oder höher deutlich reduzieren lässt, wenn der Nickelgehalt dieser Legierung auf 33,0 bis 35,0 Masse-% angehoben wird. Bei einem mittleren Nickelgehalt von 34 Masse-% im Vergleich von zuvor 31 Masse-% kann der Lösungsglühtemperaturbereich um mindestens 30 °C auf zumindest 1120 bis 1150°C abgesenkt werden. Weiterhin wurde gefunden, dass sich eine Erhöhung des Mangangehalts durch Erhöhung der Löslichkeit von Stickstoff positiv auf die metallurgische Stabilität auswirkt. Sowohl Mangan als auch Stickstoff selbst wirken als Stabilisatoren des austenitischen Gefüges. Zudem bindet Mangan Schwefel ab, der die Warmumformbarkeit des Werkstoffes beeinträchtigt. Üblicherweise wird der Werkstoff 1.4562 mit einem Mangangehalt von im Mittel etwa 1,7 Masse-% hergestellt. Es wurde nun gefunden, dass eine Erhöhung des Mangangehalts auf 1,8 bis 2,6 Masse-% in Kombination mit einer Zulegierung von Stickstoff die Lösungsglühbehandlung durch die zusätzliche Austenitstabilisierung erleichtert, indem die erforderliche Temperatur noch etwas weiter abgesenkt und die erforderlicher Zeit verkürzt werden kann. Zu hohe Mangangehalte beeinträchtigen jedoch die Korrosionsbeständigkeit, was sich beispielsweise bei der Messung in der Testlösung "Grüner Tod" zeigt.

Es ist daher nicht offensichtlich, den Mangangehalt zu erhöhen. Tatsächlich konnte in den durchgeführten Laborschmelzen für Mangan durch metallografische Untersuchungen die erhöhende Wirkung auf die Sigma-Solvus-Temperatur gefunden werden, jedoch wird dieser scheinbare Nachteil durch Verbesserung der Stickstofflöslichkeit in der Legierungsmatrix aufgehoben. Dieser Stickstoff erniedrigt gemäß Rechsteiner ETH Zürich T sigma-solvus und steht zur Erhöhung der Korrosionsbeständigkeit gegen Lochfraßkorrosion in Chlorid-haltigen Medien nach der PREN - Formel, wie folgt zur Verfügung.

$$\text{PREN: Cr} + 3{,}3\ \text{Mo} + 30\ \text{N}$$

Die durch den definierten erfindungsgemäßen Manganzusatz erhöhte Stickstofflöslichkeit führt zu einer geringeren Abbindung des Stickstoffes an Chrom als Metallnitrid. Hierdurch wird die effektive Menge Chrom $Cr_{eff}$ erhöht, welches zur Erhöhung der Korrosionsbeständigkeit zur Verfügung steht.

$$Cr_{eff} = Cr - 10\ Cr\ (C+N)$$

Die Wirksumme PREN (= Masse % Cr + 3,3 Masse % Mo + 30 Masse % N) aus den gewichteten Gehalten an Chrom, Molybdän und Stickstoff soll für die neue Legierung wie für die Legierung 1.4562 im Mittel über einem Wert von 50 liegen. Die aus ihr hergestellten Bauteile sollten unter den Bedingungen gemäß ASTM G 28, Practice A beständig gegenüber interkristalliner Korrosion sein und im lösungsgeglühten Zustand eine Abtragungsrate von weniger als 0,5 mm/a aufweisen. Schließlich sollte sie auch geeignet sein zur Herstellung von Bauteilen, die unter den Bedingungen eines aggressiven Sauergas-Prüf-Tests frei von Spannungsriss- und Lochfraßkorrosion sein müssen.

Ein weiteres erfindungsgemäßes Merkmal der modifizierten Legierung besteht im Einsatz von Seltenen Erden (SE), bevorzugt Cer-Mischmetall. Werden diese in dem vorgesehenen Umfang zugesetzt, tragen sie neben der Wirksamkeit von Mangan durch die weitere Abbindung von Schwefel zu einer guten Verarbeitbarkeit, insbesondere bei der Warmformgebung, bei. Die Gehalte an SE, insbesondere Cer-Mischmetall, liegen zwischen 0,001 und 0,1 %. Der bevorzugte Bereich wird mit etwa 0,06 % angesetzt.

Cer Mischmetall beinhaltet neben Cer Lanthan, Neodym, Praseodym, Samarium, Terbium und Yttrium sowie Spuren anderer Seltenerdmetalle.

Zur Verbesserung der Verarbeitbarkeit, insbesondere bei der Warmformgebung, wird vorgeschlagen, ausgehend von einer vielseitig verwendbaren Nickel-Eisen-Chrom-Molybdän-Legierung (EN-Werkstoff N° 1.4562) den Nickelgehalt und den Mangangehalt zu optimieren. Auf diese Weise kann die Lösungsglühtemperatur der Sigma-Phase bedeutend herabgesetzt werden, ohne dass sich die Beständigkeit der Legierung gegenüber technischer Phosphorsäure und anderen technischen Säuren sowie gegenüber Loch- und Spaltkorrosionsangriff vermindert.

Im Folgenden werden bevorzugte Anwendungsfälle der erfindungsgemäßen Legierung angeführt:

- als Werkstoff zur Herstellung von Bauteilen, die in -wässrigen neutralen oder sauren Medien mit hoher Chloridionenkonzentration eine gute Korrosionsbeständigkeit, insbesondere gegenüber Lochfraß- und/oder Spaltkorrosion aufweisen müssen;
- als Werkstoff zur Herstellung von Bauteilen, die in technischer Phosphorsäure mit einer Chloridionenkonzentration bis zu 1000 ppm bei 100 °C einen Abtragungsrate von weniger als 0,20 mm/a aufweisen müssen;
- als Werkstoff zur Herstellung von Bauteilen, die in wässrigen neutralen Medien mit einer Chloridionenkonzentration in der Größenordnung von 45.000 ppm bei 75°C ein Lochfraßpotential von mindestens 1000 $mV_H$ und bei 90°C von mindestens 800 $mV_H$ aufweisen müssen;
- als Werkstoff zur Herstellung von Bauteilen, die in sauren Medien mit einer Chloridionenkonzentration von 50.000 ppm und mehr, wie z.B. in einer $FeCl_3$-Lösung eine kritische Lochfraßtemperatur von mindestens 80°C und eine kritische Spaltkorrosionstemperatur von mindestens 50°C aufweisen müssen;
- als Werkstoff zur Herstellung von Bauteilen, die unter den Bedingungen gemäß ASTM G 28, Practice A beständig gegenüber interkristalliner Korrosion sind und im lösungsgeglühten Zustand eine Abtragungsrate von weniger als 0,5 mm/a aufweisen.
- als Werkstoff zur Herstellung von Bauteilen, die unter den Bedingungen eines Sauergas-Prüf-Tests frei von Spannungsriss- und Lochfraßkorrosion sind.

Die erfindungsgemäße Legierung kann bevorzugt für die Erzeugung von Bändern, Blechen, Stangen und Schmiedeteilen, Rohren und Drähten, ebenfalls als Schweißdrähte, eingesetzt werden.

Bisher nur schwierig mit der Legierung gemäß Werkstoff-Nr. 1.4562 aufgrund der hohen Lösungsglühtemperatur herstellbare walz- oder sprengplattierte Bauteile können durch die reduzierte Lösungsglühtemperatur nun leichter hergestellt werden.

Tabelle 1 offenbart Ausführungsbeispiele der erfindungsgemäßen im Labor erschmolzenen Legierung (LB 2151), einer großtechnischen Schmelze (Nicrofer 3426 hMo) sowie einer dem Stand der Technik zuzuordnenden Legierung (LB 2149), insbesondere deren chemische Zusammensetzungen und Prüfergebnisse.

Tabelle 1

|  | LB 2149 (Angaben in %) | LB 2151 (Angaben in %) | Nicrofer 3426 hMo (135755) |
|---|---|---|---|
| Ni | 31,78 | 33,84 | 33,79 |
| Fe | 30,8 (R) | 29,52 (R) | 29,16 (R) |
| Cr | 27,93 | 26,74 | 26,38 |
| Mo | 6,16 | 6,67 | 6,88 |
| Cu | 1,13 | 1,27 | 1,16 |
| Mn | 1,54 | 1,54 | 1,97 |

(fortgesetzt)

| | LB 2149 (Angaben in %) | LB 2151 (Angaben in %) | Nicrofer 3426 hMo (135755) |
|---|---|---|---|
| Si | 0,04 | 0,04 | 0,05 |
| Al | 0,15 | 0,04 | 0,04 |
| N | 0,18 | 0,194 | 0,21 |
| C | 0,022 | 0,0024 | 0,007 |
| S | 0,0046 | 0,0015 | 0,002 |
| B | 0,003 | 0,004 | 0,003 |
| SE | 0,07 | 0,02 | 0,02 |
| Co | | | 0,14 |

Die Laborcharge LB 2149 hat einen außerhalb des beanspruchten Ni-Bereichs angesiedelten Ni-Gehalt.

Metallographie:

Das Gefüge ist frei von Sigma-Phase und vollständig rekristallisiert.

Mechanische Werte Blech 22 mm :

Zugversuch bei Raumtemperatur: Querproben

| Blech 22 mm Nicrofer 3426hMo #135755 | Dehngrenze Rp $_{0,2}$ N/mm$^2$ | Dehngrenze Rp $_{1,0}$ N/mm$^2$ | Zugfestigkeit Rm | Brucheinschnürung A$_{man}$ % |
|---|---|---|---|---|
| | 330 | 371 | 708 | 59 |

Härtemessung
HRB 84
Kerbschlag: Querproben
262 Joule (Av)
Korrosionsmessungen kritische Lochfraßtemperatur im "Grünen Tod":
Die Untersuchungen der kritischen Lochfraßtemperatur im Testmedium Grüner Tod haben ergeben, dass die Solltemperatur von 55°C überschritten wurde.
Die berechnete wirksame PREN aus dem Chrom, Molybdän und Stickstoff liegt für die erfindungsgemäße Legierung bei PREN = 54, und liegt damit wie die bekannte Legierung 1.4562 bei einem Zahlenwert über 50.

Kritische Lochkorrosionstemperatur nach ASTM G48 C:

Proben aus dem an 22 mm gewalztem Blech erreichten im ASTM G48 C-Test eine kritische Lochfraßtemperatur zwischen 90 und 100°C. Proben des Werkstoffes 1.4562 aus einem 5mm Blech als Vergleich erreichten in diesem Test eine maximale Temperatur von 95 °C.

Korrosionstest ASTM G 28, Practice A (interkristalline Korrosion):

Als Ergebnis ergab sich Wert von 0,19 mm/a, wobei im Schliff keine interkristalline Korrosion festgestellt wurde.

**Patentansprüche**

1. Legierung mit (in Masse-%)

Ni          33,5 - 35 %

(fortgesetzt)

| | |
|---|---|
| Cr | 26 - 28 % |
| Mo | 6 - 7 % |
| Cu | 0,5 - 1,5 % |
| Mn | 1,0 - 4 % |
| Si | max. 0,1 % |
| Al | 0,01 - 0,3 % |
| C | max. 0,01 % |
| N | 0,1 - 0,25 % |
| B | 0,001 - 0,004 % |
| SE | > 0 bis 1 % |

Fe Rest, einschließlich unvermeidbarer Verunreinigungen.

2. Legierung nach Anspruch 1, **dadurch gekennzeichnet, dass** der Ni-Gehalt (in Masse-%) 33,5-34,5% beträgt.

3. Legierung nach Anspruch 1 oder 2, **dadurch gekennzeichnet, dass** der Mn-Gehalt (in Masse-%) 1,5-3,5% beträgt.

4. Legierung nach einem der Ansprüche 1 bis 3, **dadurch gekennzeichnet, dass** der Mn-Gehalt (in Masse-%) 1,5-3,0 % beträgt:

5. Legierung nach einem der Ansprüche 1 bis 4, **dadurch gekennzeichnet, dass** der Mn-Gehalt (in Masse-%) 1,5 - 2,6 % beträgt.

6. Legierung nach einem der Ansprüche 1 bis 5, **dadurch gekennzeichnet, dass** der Mangangehalt (in Masse-%) 1,5 bis 2,0 % beträgt.

7. Legierung nach einem der Ansprüche 1 bis 6, **dadurch gekennzeichnet, dass** der Stickstoffgehalt (in Masse-%) 0,14 bis 0,22 % beträgt.

8. Legierung nach einem der Ansprüche 1 bis 7, **dadurch gekennzeichnet, dass** SE durch Cer-Mischmetall in Gehalten zwischen 0,001 bis 0,1 % gebildet-ist.

9. Legierung nach Anspruch 8, **dadurch gekennzeichnet, dass** die Gesamtsumme SE max. 0,06 % beträgt.

10. Legierung nach einem der Ansprüche 1 bis 9, **dadurch gekennzeichnet, dass** die Wirksumme PREN (= Masse % Cr + 3,3 Masse-% Mo + 30 Masse-% N) $\geq$ 50, insbesondere $\geq$ 54, beträgt.

**Claims**

1. An alloy comprising (in % by mass)

| | |
|---|---|
| Ni | 33.5 - 35 % |
| Cr | 26 - 28 % |
| Mo | 6-7 % |
| Cu | 0.5 - 1.5 % |
| Mn | 1.0 - 4 % |
| Si | max. 0,1 % |
| Al | 0.01 - 0.3 % |
| C | max. 0.01 % |
| N | 0.1 - 0.25 % |
| B | 0.001 - 0.004 % |
| rare earths | > 0 to 1 % |

Fe being the rest, including unavoidable impurities.

2. An alloy according to claim 1, **characterized in that** the Ni content (in % by mass) is comprised between 33.5 and 34.5 %.

3. An alloy according to claim 1 or 2, **characterized in that** the Mn content (in % by mass) is comprised between 1.5 and 3.5 %.

4. An alloy according to one of the claims 1 through 3, **characterized in that** the Mn content (in % by mass) is comprised between 1.5 and 3.0 %.

5. An alloy according to one of the claims 1 through 4, **characterized in that** the Mn content (in % by mass) is comprised between 1.5 and 2.6 %.

6. An alloy according to one of the claims 1 through 5, **characterized in that** the manganese content (in % by mass) is comprised between 1.5 and 2.0 %.

7. An alloy according to one of the claims 1 through 6, **characterized in that** the nitrogen content (in % by mass) is comprised between 0.14 and 0.22 %.

8. An alloy according to one of the claims 1 through 7, **characterized in that** the rare earths are formed by contents comprised between 0.001 and 0.1 % of a cerium composition metal.

9. An alloy according to claim 8, **characterized in that** the total of rare earths is max. 0.06 %.

10. An alloy according to one of the claims 1 through 9, **characterized in that** the pitting index PREN (=% by mass Cr + 3.3 % by mass Mo + 30 % by mass N) is $\geq$ 50, especially $\geq$ 54.

## Revendications

1. Alliage comprenant (en % en masse)

| | |
|---|---|
| Ni | 33,5 - 35 % |
| Cr | 26 - 28 % |
| Mo | 6-7 % |
| Cu | 0,5 - 1,5 % |
| Mn | 1,0 - 4 % |
| Si | max. 0,1 % |
| Al | 0,01 - 0,3 % |
| C | max. 0,01 % |
| N | 0,1 - 0,25 % |
| B | 0,001 - 0,004 % |
| terres rares | 0 jusqu'à 1 % |

le reste étant du fer, des impuretés inévitables y compris.

2. Alliage selon la revendication 1, **caractérisé en ce que** la teneur en Ni (en % en masse) est comprise entre 33,5 et 34,5 %.

3. Alliage selon la revendication 1 ou la revendication 2, **caractérisé en ce que** la teneur en Mn (en % en masse) est comprise entre 1,5 et 3,5 %.

4. Alliage selon l'une des revendications 1 à 3, **caractérisé en ce que** la teneur en Mn (en % en masse) est comprise entre 1,5 et 3,0 %.

**5.** Alliage selon l'une des revendications 1 à 4, **caractérisé en ce que** la teneur en Mn (en % en masse) est comprise entre 1,5 et 2,6 %.

**6.** Alliage selon l'une des revendications 1 à 5, **caractérisé en ce que** la teneur en manganèse (en % en masse) est comprise entre 1,5 et 2,0 %.

**7.** Alliage selon l'une des revendications 1 à 6, **caractérisé en ce que** la teneur en azote (en % en masse) est comprise entre 0,14 et 0,22 %.

**8.** Alliage selon l'une des revendications 1 à 7, **caractérisé en ce que** les terres rares sont formées par des teneurs en métal mixte de cérium comprises entre 0,001 et 0,1 %.

**9.** Alliage selon la revendication 8, **caractérisé en ce que** le total des terres rares est max. 0,06 %.

**10.** Alliage selon l'une des revendications 1 à 9, **caractérisé en ce que** l'indice PREN (= % en masse de Cr + 3,3 % en masse de Mo + 30 % en masse de N) est $\geq$ 50, notamment $\geq$ 54.

Laborcharge LB 2151 (erfindungsgemäß)

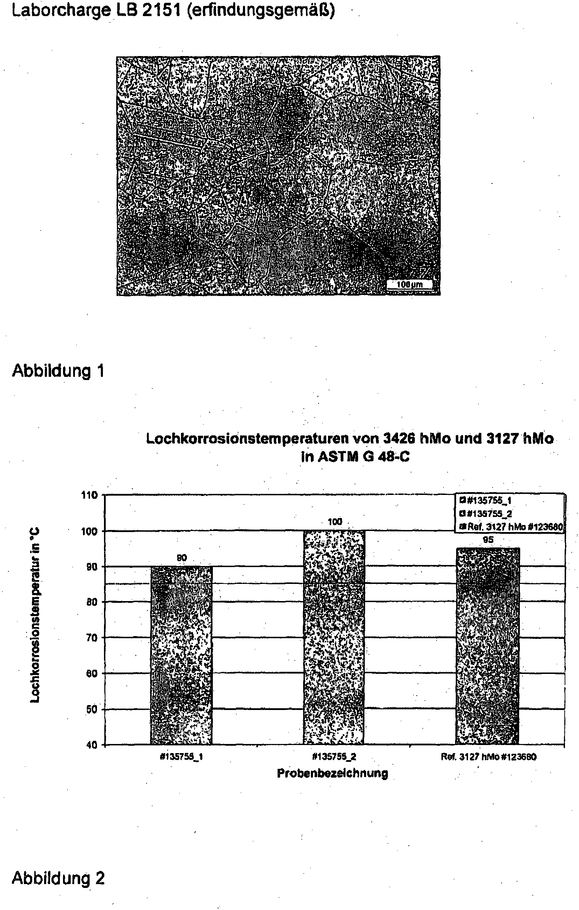

Abbildung 1

**Lochkorrosionstemperaturen von 3426 hMo und 3127 hMo in ASTM G 48-C**

Abbildung 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3223457 A1
- US 5841046 A
- US 4824638 A
- EP 0292061 A1